# FASCICULE DE BREVET EUROPEEN

(11) **EP 2 545 398 B1**
(45) Date de publication et mention de la délivrance du brevet: **04.12.2013**
(21) Numéro de dépôt: 11701684.0
(22) Date de dépôt: 03.02.2011
(51) Int. Cl.: G01S 19/11, G01S 19/25

(54) **SYSTEME DE POSITIONNEMENT PAR PSEUDOLITES FONCTIONNANT EN MODE ASSISTE**
IM UNTERSTÜTZEN MODUS BETRIEBENES PSEUDOLITENNAVIGATIONSSYSTEM
PSEUDOLITE POSITIONING SYSTEM OPERATING IN ASSISTED MODE

(30) Priorité: 12.03.2010 FR 1000998
(43) Date de publication de la demande: 16.01.2013
(73) Titulaire: Thales, 92200 Neuilly-sur-Seine (FR)
(72) Inventeur: MONNERAT, Michel, F-31100 Toulouse (FR)
(74) Mandataire: Lopez, Frédérique
(86) Numéro de dépôt international: PCT/EP2011/051542
(87) Numéro de publication internationale: WO 2011/110386

(56) Documents cités:
- EP-A1- 2 012 136
- US-A1- 2005 086 001
- US-B1- 6 198 432

## Description

La présente invention concerne un système permettant à un objet équipé d'un récepteur adapté de déterminer sa position dans une zone contrainte.

Plus particulièrement, le système de positionnement selon la présente invention est fondé sur l'utilisation de pseudolites.

Comme cela est connu, les pseudolites, contraction de pseudo-satellites, sont des dispositifs fonctionnant selon les mêmes principes que les satellites appartenant à des constellations de satellites mises en oeuvre dans le cadre de systèmes de navigation par satellites, connus sous l'acronyme anglo-saxon de GNSS, pour Global Navigation Satellite System, tels que le système GPS, pour Global Positioning System en anglais, ou le système Galileo. A la différence des satellites, les pseudolites sont déployés au sol. Typiquement ; ils peuvent être répartis dans un bâtiment, et de manière générale, dans des zones dites contraintes.

Le principe général des systèmes de positionnement par pseudolites réside dans le fait que lesdits pseudolites émettent des signaux de positionnement dont le format est identique ou similaire à celui des messages émis par les satellites d'un système de navigation par satellites. Pour une bonne compatibilité avec les systèmes existants, notamment les récepteurs, on attribue généralement à chaque pseudolite un identifiant correspondant à celui d'un satellite. Dans le contexte des constellations de satellites, ces identifiants sont appelés codes d'étalement, comme cela est connu de l'homme du métier. La portée des signaux émis par des pseudolites est variable ; elle dépend de leur puissance, et de leur utilisation. Des objets équipés de récepteurs adaptés peuvent acquérir ces signaux de positionnement. Comme pour un système de navigation par satellites classique, un calcul de pseudo-distances entre ledit objet et les pseudolites dont il a acquis les signaux de positionnement, suivis d'un calcul de triangulation, permettent de déterminer la position de l'objet. Le principe du positionnement par triangulation est connu : il s'agit de déterminer la position d'un récepteur comme état à l'intersection de sphères de centre les émetteurs et de rayon la distance entre récepteur et émetteurs. Les calculs peuvent être effectués de manière embarquée, par l'objet lui-même, ou de manière délocalisée par un serveur.

Des systèmes de positionnement par pseudolites sont généralement déployés dans des zones dites « contraintes ». Il peut s'agir, typiquement, de bâtiments à l'intérieur desquels les signaux de positionnement émis par des satellites en orbite autour de la Terre ne peuvent pas être acquis, en raison du masquage produit par les murs, les plafonds...etc. Il peut s'agir de zones non couvertes par le système de navigation par satellites considéré. De manière générale, on définira une zone contrainte comme étant une zone dans laquelle des signaux de positionnement émis par des satellites ne peuvent pas être correctement acquis. A contrario, on peut parler de « zone ouverte » dans les zones où des signaux de positionnement émis par des satellites peuvent être acquis par un récepteur adapté. D'autre part, les satellites dont un récepteur peut théoriquement recevoir des signaux de positionnement, du fait de la position relative adéquate entre lesdits satellites et ledit récepteur, sont dits « visibles » du récepteur, tandis que les autres satellites de la constellation sont dits « non visibles ». Ces termes consacrés, « visible » et « non visible » sont utilisables dans le cas de pseudolites.

Les définitions données ci-dessus des termes « zone contrainte », « zone ouverte », « satellite visible » et « satellite non visible » valent pour toute la suite de la description et pour les revendications.

Il est également connu que les systèmes de positionnement par satellites sont souvent complémentés d'un système d'assistance. Cette technologie est bien connue de l'homme de l'art sous l'appellation d'Assisted-GNSS. Ces systèmes d'assistance s'articulent généralement autour d'un serveur appelé serveur d'assistance dont le rôle est d'envoyer des informations au récepteur concernant la constellation de satellites, telles que la position des satellites visibles, et d'autres aides facilitant le traitement des signaux de positionnement. Un système de positionnement par pseudolites peut également présenter un tel serveur d'assistance. En mode dit « assisté », ce serveur d'assistance calcule généralement la position du récepteur à partir des calculs de pseudo-distances que ce dernier lui fournit. Ce mode de fonctionnement est également bien conne de l'homme de métier sous le terme mode dit MS-Assisted, ou UE-Assisted pour respectivement Mobile Station-assisted ou User Equipment-Assisted.

C'est dans un tel mode de fonctionnement assisté qu'est mise en oeuvre l'invention.

L'état de la technique divulgue différentes technologies. D'abord, à titre d'alternatives au positionnement par pseudolites, on connaît des techniques de positionnement par WiFi, mais cette solution n'est acceptable que dans des environnements statiques, et nécessite des déploiements matériels spécifiques pour la localisation en zone contrainte, ainsi que des phases de calibration relativement lourdes. Toujours au rang des alternatives, on utilise également des techniques de positionnement fondées sur les normes GSM ou UMTS par exemple, permettant de localiser un téléphone portable dans les zones couvertes ; cependant, la précision atteinte est de l'ordre de quelques dizaines de mètres, ce qui n'est pas satisfaisant.

Enfin, les systèmes de positionnement par pseudolites connus présentent un certain nombre d'inconvénients. En particulier, ils ne permettent pas de passer d'une zone contrainte à une zone ouverte et vice versa, de façon continue et autonome. D'autre part, ils ne permettent généralement pas de démarrage à froid, sans connaissance de la position initiale du récepteur. En effet, les systèmes connus impliquent généralement l'utilisation de récepteurs conçus spécifiquement pour un fonctionnement en zone contrainte et l'acquisition de signaux de positionnement émis par des pseudolites.

US 2005/086001 décrit un système de positionnement GNSS comprenant un ensemble de pseudolites et un serveur apte à configurer l'ensemble des pseudolites de telle manière que les codes d'étalement des pseudolites correspondent à des codes d'étalement de satellites non visibles par un récepteur correspondant.

Dans d'autres cas, ils nécessitent une intervention sur le récepteur pour que celui-ci commence à acquérir des signaux émis par des pseudolites, qui sont identifiés par des codes d'étalement spécifiques, potentiellement inconnus des récepteurs voués à une utilisation des satellites et ne connaissant par conséquent que les codes d'étalement desdits satellites. En tout état de cause, les modes de fonctionnement en zone contrainte et en zone ouverte ne sont généralement pas compatibles, en ce sens qu'ils ne peuvent être actifs simultanément.

Par ailleurs, une contrainte importante à prendre en considération réside dans le fait que les codes d'étalement des satellites appartenant à des constellations de satellites sont réservés pour lesdits satellites. Il n'est pas possible d'utiliser d'autres codes sans devoir concevoir des récepteurs spécifiques car les récepteurs du marché sont conçus pour acquérir des signaux de positionnement provenant des satellites.

Un but de l'invention est de résoudre ces inconvénients en proposant un système de positionnement par pseudolites aptes à fonctionner avec des récepteurs standards pouvant acquérir de manière transparente, du point de vue du récepteur, des signaux de positionnement émis par des pseudolites comme s'il s'agissait de signaux de positionnement émis par des satellites appartenant à une constellation de satellites d'un système de navigation par satellites.

Le principe général de l'invention consiste ainsi à leurrer le récepteur de telle manière que lorsqu'il acquiert les signaux de positionnement émis par des pseudolites équipant la zone contrainte dans laquelle il se trouve, ledit récepteur ait l'impression d'acquérir normalement des signaux émis par des satellites visibles. Ceci est rendu possible par le système décrit à la revendication 1.

Ainsi, l'invention a pour objet un système de positionnement d'un objet équipé d'un récepteur, comprenant un ensemble de pseudolites émettant des signaux de positionnement, et répartis dans une zone contrainte, et des moyens d'assistance aptes à communiquer avec ledit récepteur et à calculer la position de l'objet, et un serveur apte à configurer de façon dynamique l'ensemble de pseudolites, lesdits pseudolites présentant par ailleurs chacun un code d'étalement correspondant à celui d'un satellite appartenant à une constellation de satellites d'un système de navigation par satellites, la configuration dynamique des pseudolites par le serveur étant telle que les codes d'étalement desdits pseudolites correspondent à des codes d'étalement de satellites de la constellation de satellites non visibles par le récepteur de l'objet,
dans lequel les moyens d'assistance communiquent audit récepteur une liste de codes d'étalement censés être ceux de satellites visibles par ledit récepteur mais correspondant en réalité aux codes d'étalement de l'ensemble de pseudolites, de manière à leurrer le récepteur qui peut acquérir les signaux de positionnement émis par des pseudolites et communiquer avec les moyens d'assistance afin que ceux-ci calculent la position de l'objet.

Selon un mode de réalisation de l'invention, la position de chaque pseudolite de l'ensemble de pseudolites dans la zone contrainte étant connue des moyens d'assistance, la position de l'objet est calculée par triangulation, à partir des positions connues des pseudolites et de mesures de pseudo-distances réalisées par le récepteur.

Selon un autre mode de réalisation, le récepteur pouvant avoir accès aux éphémérides de la constellation de satellites, les moyens d'assistance communiquent par ailleurs audit récepteur une heure courante erronée correspondant à l'heure courante décalée d'un offset de sorte que le récepteur consultant les éphémérides détermine que les codes d'étalement des pseudolites correspondent à des codes d'étalement de satellites de la constellation de satellites censés être visibles par ledit récepteur.

Avantageusement, les pseudolites émettent, à l'heure courante, des signaux de positionnement identiques aux signaux de positionnement qu'émettraient les satellites de la constellation de satellites dont ils empruntent le code d'étalement à l'heure courante erronée.

Avantageusement, les moyens d'assistance communiquent en outre audit récepteur un flag de non intégrité pour l'ensemble des codes d'étalement de satellites de la constellation de satellites non attribués à des pseudolites.

Avantageusement, le serveur met en oeuvre les moyens d'assistance, par l'intermédiaire d'une programmation adaptée.

D'autres caractéristiques et avantages de l'invention apparaîtront à l'aide de la description qui suit faite en regard des dessins annexés qui représentent :
- la figure 1 : le schéma d'un exemple de disposition autour de la Terre de satellites d'un système de navigation par satellites ;
- la figure 2 : la représentation schématique du principe de fonctionnement d'un système de navigation par satellites en mode assisté.

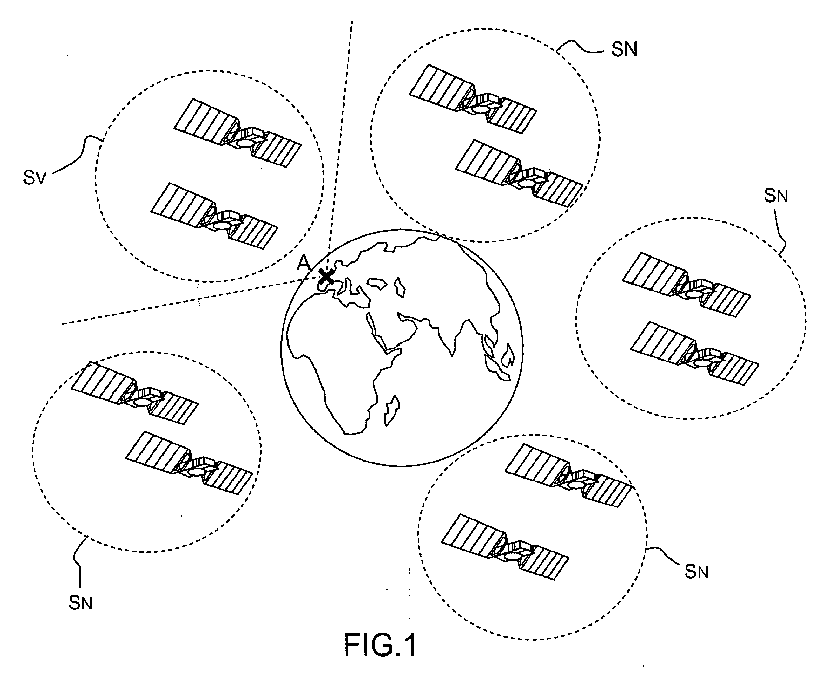

La figure illustre la définition donnée précédemment, et bien connue de l'homme du métier, des termes « satellite visible » et « satellite non visible ». En effet, comme le montre la figure 1 à un instant donné, du point A situé à la surface de la Terre, seuls les satellites SV sont visibles, tandis que les satellites SN sont non visibles. De ce fait, seuls des signaux de positionnement émis par les satellites visibles SV pourront être acquis par un récepteur placé au point A.

D'un autre côté, comme cela a été évoqué précédemment, le système de positionnement par pseudolites selon l'invention met en oeuvre un serveur d'assistance contrôlant l'ensemble des pseudolites équipant la zone contrainte considérée, dans laquelle se trouve l'objet à positionner. Ce serveur d'assistance est programmé notamment pour assurer la fonction d'attribution dynamique d'un code d'étalement à chacun des pseudolites de la zone contrainte.

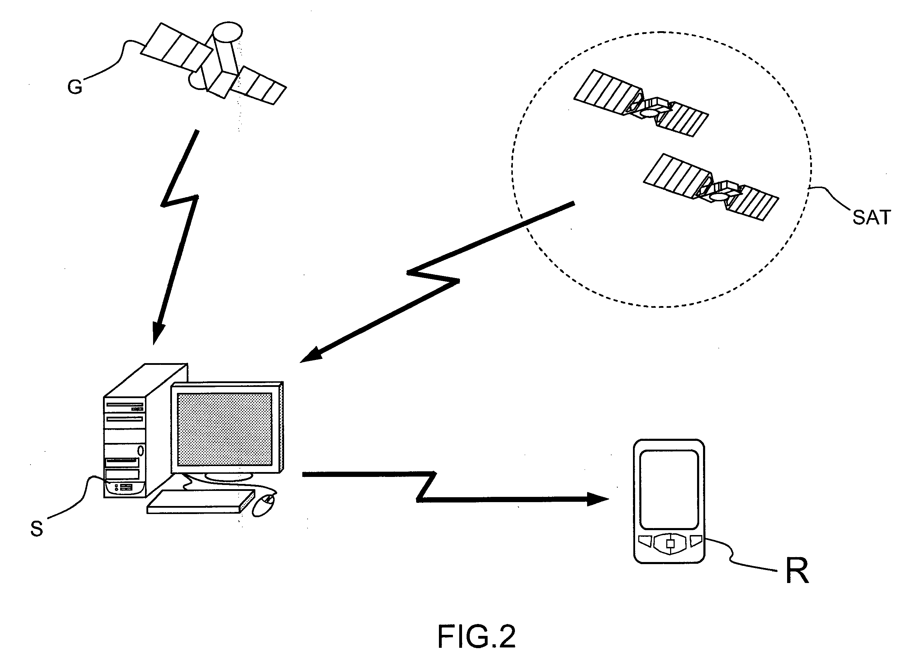

La figure 2 représente le principe général d'un mode de fonctionnement dit « assisté » d'un système de navigation par satellites, ou Assisted-GNSS comme mentionné précédemment. Dans l'exemple de la figure 2, le serveur d'assistance S collecte des informations émises par les satellites de la constellation de satellites SAT appartenant à un système de navigation par satellites et, optionnellement, des informations émises par d'autres satellites, par exemple des satellites géostationnaires G appartenant à un système de collecte de données. Le serveur d'assistance S exploite ces informations afin d'être en mesure de fournir sur demande à un récepteur R des données d'assistance telles que :
- des informations de localisation,
- des références horaires, comme le « temps GPS »,
- des informations pour la navigation, comme les éphémérides et les corrections applicables aux horloges des satellites SAT,
- des corrections actualisées des modèles relatifs à l'ionosphère,
- des informations correctives pour effectuer de la navigation différentielle,
- des informations sur l'intégrité des signaux de positionnement reçus en fonction du satellite émetteur,
- les almanachs de la constellation de satellites SAT,
- la liste des identifiants, en général, des codes d'étalement, des satellites visibles de la constellation de satellites SAT en fonction de la zone dans laquelle se trouve le récepteur R,
- les éphémérides de la constellation de satellites SAT étendues pour plusieurs jours,
- ...etc.

Le principe de l'invention consiste à leurrer le récepteur R de l'objet que l'on cherche à positionner par une programmation adéquate du serveur d'assistance S.

Tout d'abord, le serveur d'assistance S est programmé pour attribuer de façon dynamique aux pseudolites des codes d'étalements qui sont ceux de satellites non visibles depuis la zone contrainte considérée. Cela est possible parce que le serveur d'assistance S a la connaissance de la position de l'ensemble des satellites de la constellation de satellites SAT considérée et des éphémérides correspondants. Ce point est primordial afin d'éviter tout risque d'interférence, d'une part vis-à-vis d'utilisateurs extérieurs à la zone contrainte, et d'autre part vis-à-vis de satellites réels au niveau de zones dans lesquelles des signaux de positionnement émis par des satellites peuvent être reçus bien que l'on se trouve en zone contrainte : par exemple, à l'intérieur d'un bâtiment, il peut s'agir de zones situées près de fenêtres. Il pourrait en effet ne pas être possible de discerner les signaux de positionnement émis par des pseudolites de ceux émis par des satellites.

Selon l'invention, le serveur d'assistance S fournit au récepteur R des données d'assistance modifiées en vue de leurrer ledit récepteur R.

Ces données modifiées fournies par le serveur d'assistance comprennent :
- Une liste des codes d'étalements des pseudolites visibles depuis la zone contrainte où se trouve le récepteur R, correspondant à des codes d'étalement de satellites non visibles SN.
- De préférence, une référence horaire censée correspondre à l'heure courante, appelée Time Of Week selon le terme anglais consacré, mais égale à l'heure courante décalée d'un offset, de sorte que, dans le cas où le récepteur R aurait stocké dans sa mémoire interne les almanachs de la constellations de satellites dans le but de déterminer de manière autonome la liste des satellites visibles, ledit récepteur ne détecte pas d'incohérence entre la liste de satellites visibles - correspondant en réalité à la liste des pseudolites visibles fournie par le serveur d'assistance S - et la liste de satellites visibles qu'il serait en mesure de déterminer par lui-même. L'offset appliqué doit par conséquent être choisi de manière adéquate, de manière à ce que les codes d'étalement des pseudolites correspondent à des codes d'étalement de satellites censés être visibles à l'heure courante modifiée, égale à l'heure courante décalée dudit offset.
- Optionnellement, un flag de non-intégrité des satellites censés être non visibles à l'heure courante modifiée mais pouvant en pratique être visibles à l'heure courante réelle. Un flag de non-intégrité est interprété par un récepteur R comme signifiant que les signaux émis par les satellites concernés par le flag de non-intégrité sont erronés et ne doivent pas être pris en compte. Un tel flag de non-intégrité concernant l'ensemble des satellites dont le code d'étalement n'a pas été attribué à un pseudolite peut donc être diffusé au récepteur R. De cette façon, le récepteur R ne cherchera pas à acquérir ces satellites et économisera donc de l'énergie ; de plus, il n'y aura pas de risque de conflit en cas de calcul de position à partir de signaux de positionnement provenant à la fois de pseudolites et de satellites SV.

Par ailleurs, dans le mode assisté utilisé dans le cadre de l'invention, le calcul des pseudo-distances et la détermination de la position du récepteur sont de préférence effectués par le serveur d'assistance ou tout calculateur adapté. De ce fait, le récepteur R n'a pas à manipuler les informations de position des pseudolites.

Le serveur d'assistance S, mettant en oeuvre la diffusion de données d'assistance modifiées peut être constitué de moyens séparés comprenant des moyens d'assistance calculant les données d'assistance modifiées à diffuser et un serveur pour la diffusion desdites données d'assistance modifiées.

L'invention a pour principal avantage de proposer une solution de positionnement par pseudolites en zone contrainte qui soit transparente pour la plupart des récepteurs standards aptes à acquérir des signaux de positionnement dans le cadre d'un système de navigation global par satellites. Aucune modification matérielle ni aucun logiciel particulier n'est à développer pour mettre en oeuvre la solution préconisée, qui repose sur une programmation et une configuration originale d'un serveur d'assistance permettant de leurrer lesdits récepteurs.

## Revendications

1. Système de positionnement d'un objet équipé d'un récepteur (R), comprenant un ensemble de pseudolites émettant des signaux de positionnement, et répartis dans une zone contrainte, et des moyens d'assistance (S) aptes à communiquer avec ledit récepteur (R) et à calculer la position de l'objet, et un serveur (S) apte à configurer de façon dynamique l'ensemble de pseudolites, lesdits pseudolites présentant par ailleurs chacun un code d'étalement correspondant à celui d'un satellite appartenant à une constellation de satellites d'un système de navigation par satellites, la configuration dynamique des pseudolites par le serveur étant telle que les codes d'étalement desdits pseudolites correspondent à des codes d'étalement de satellites de la constellation de satellites non visibles (SN) par le récepteur (R) de l'objet,
**caractérisé en ce que** les moyens d'assistance (S) communiquent audit récepteur (R) une liste de codes d'étalement censés être ceux de satellites visibles par ledit récepteur (R) mais correspondant en réalité aux codes d'étalement de l'ensemble de pseudolites, de manière à leurrer le récepteur (R) qui peut acquérir les signaux de positionnement émis par des pseudolites et communiquer avec les moyens d'assistance (S) afin que ceux-ci calculent la position de l'objet.

2. Système selon la revendication 1, la position de chaque pseudolite de l'ensemble de pseudolites dans la zone contrainte étant connue des moyens d'assistance (S), **caractérisé en ce que** la position de l'objet est calculée par triangulation, à partir des positions connues des pseudolites et de mesures de pseudo-distances réalisées par le récepteur (R).

3. Système selon l'une quelconque des revendications précédentes, le récepteur (R) pouvant avoir accès aux éphémérides de la constellation de satellites, **caractérisé en ce que** les moyens d'assistance (S) communiquent par ailleurs audit récepteur (R) une heure courante erronée correspondant à l'heure courante décalée d'un offset de sorte que le récepteur (R) consultant les éphémérides détermine que les codes d'étalement des pseudolites correspondent à des codes d'étalement de satellites de la constellation de satellites censés être visibles par ledit récepteur (R).

4. Système selon la revendication 3, **caractérisé en ce que** les pseudolites émettent, à l'heure courante, des signaux de positionnement identiques aux signaux de positionnement qu'émettraient les satellites de la constellation de satellites dont ils empruntent le code d'étalement à l'heure courante erronée.

5. Système selon l'une quelconque des revendications précédentes, **caractérisé en ce que** les moyens d'assistance (S) communiquent en outre audit récepteur (R) un flag de non intégrité pour l'ensemble des codes d'étalement de satellites de la constellation de satellites non attribués à des pseudolites.

6. Système selon l'une quelconque des revendications précédentes, **caractérisé en ce que** le serveur (S) met en oeuvre les moyens d'assistance (S), par l'intermédiaire d'une programmation adaptée.

## Patentansprüche

1. System zum Positionieren eines mit einem Empfänger (R) ausgestatteten Objekts, das einen Satz von Pseudoliten, die Positionierungssignale senden und über eine beschränkte Zone verteilt sind, und Assistenzmittel (S) zum Kommunizieren mit dem Empfänger (R) und zum Berechnen der Position des Objekts und einen Server (S) zum dynamischen Konfigurieren des Satzes von Pseudoliten umfasst, wobei die Pseudoliten ferner jeweils einen Spreizcode haben, der dem eines Satelliten entspricht, der zu einer Konstellation von Satelliten eines Satellitennavigationssystems gehört, wobei die dynamische Konfiguration der Pseudoliten durch den Server derart ist, dass die Spreizcodes der Pseudoliten Spreizcodes von Satelliten der Konstellation von Satelliten (SN) entsprechen, die für den Empfänger (R) des Objekts nicht sichtbar sind,
**dadurch gekennzeichnet, dass** die Assistenzmittel (S) dem Empfänger (R) eine Liste von Spreizcodes übermitteln, die eigentlich von für den Empfänger (R) sichtbaren Satelliten kommen sollen, die aber tatsächlich den Spreizcodes des Satzes von Pseudoliten entsprechen, um den Empfänger (R) zu täuschen, der die von den Pseudoliten gesendeten Positionierungssignale erfassen und mit den Assistenzmitteln (S) kommunizieren kann, so dass diese die Position des Objekts berechnen.

2. System nach Anspruch 1, wobei die Position jedes Pseudoliten des Satzes von Pseudoliten in der beschränkten Zone den Assistenzmitteln (S) bekannt ist, **dadurch gekennzeichnet, dass** die Position des Objekts durch Triangulation auf der Basis der bekannten Positionen der Pseudoliten und von Pseudodistanzmessungen berechnet wird, die von dem Empfänger (R) ausgeführt werden.

3. System nach einem der vorherigen Ansprüche, wobei der Empfänger (R) auf die Ephemeriden der Konstellation von Satelliten zugreifen kann, **dadurch gekennzeichnet, dass** die Assistenzmittel (S) dem Empfänger (R) auch eine falsche aktuelle Zeit übermitteln, die der aktuellen Zeit verschoben um einen Versatz entspricht, so dass der die Ephemeriden konsultierende Empfänger (R) feststellt, dass die Spreizcodes der Pseudoliten Spreizcodes von Satelliten der Konstellation von Satelliten entsprechen, die eigentlich für den Empfänger (R) sichtbar sein sollen.

4. System nach Anspruch 3, **dadurch gekennzeichnet, dass** die Pseudoliten zur aktuellen Zeit Positionierungssignale senden, die mit den Positionierungssignalen identisch sind, die von den Satelliten der Konstellation von Satelliten gesendet würden, von denen sie den Spreizcode zu der falschen aktuellen Zeit borgen.

5. System nach einem der vorherigen Ansprüche, **dadurch gekennzeichnet, dass** die Assistenzmittel (S) dem Empfänger (R) einen Nichtintegrität-Flag für den Satz von Spreizcodes von Satelliten der Konstellation von Satelliten übermitteln, die keinen Pseudoliten zugeordnet sind.

6. System nach einem der vorherigen Ansprüche, **dadurch gekennzeichnet, dass** der Server (S) die Assistenzmittel (S) mittels eines geeigneten Programms implementiert.

## Claims

1. A system for positioning an object provided with a receiver (R), comprising a set of pseudolites which transmit positioning signals and are distributed throughout a constrained zone, and assistance means (S) designed to communicate with said receiver (R) and to calculate the position of the object, and a server (S) designed to dynamically configure the set of pseudolites, said pseudolites also each having a spreading code corresponding to that of a satellite belonging to a constellation of satellites of a satellite navigation system, with the dynamic configuration of the pseudolites by said server being such that the spreading codes of said pseudolites correspond to spreading codes of satellites of the constellation of satellites (SN) that are non-visible to said receiver (R) of the object,
**characterised in that** said assistance means (S) communicate a list of spreading codes to said receiver (R) that should be those of satellites that are visible to said receiver (R) but which in fact correspond to the spreading codes of the set of pseudolites, so as to deceive said receiver (R), which can acquire the positioning signals transmitted by the pseudolites and communicate with said assistance means (S) so that said means calculate the position of the object.

2. The system according to claim 1, with the position of each pseudolite of the set of pseudolites in the constrained zone being known by said assistance means (S), **characterised in that** the position of the object is calculated by triangulation on the basis of the known positions of the pseudolites and of pseudo-distance measurements carried out by said receiver (R).

3. The system according to any one of the preceding claims, wherein said receiver (R) can have access to the ephemerides of the constellation of satellites, **characterised in that** said assistance means (S) also communicate an erroneous current time to said receiver (R) that corresponds to the current time shifted by an offset so that said receiver (R) consulting the ephemerides determines that the spreading codes of the pseudolites correspond to spreading codes of satellites of the constellation of satellites that should be visible by said receiver (R).

4. The system according to claim 3, **characterised in that** the pseudolites transmit, at the current time, positioning signals that are identical to the positioning signals that would be transmitted by the satellites of the constellation of satellites from which they borrow the spreading code at the erroneous current time.

5. The system according to any one of the preceding claims, **characterised in that** said assistance means (S) also communicate a non-integrity flag to said receiver (R) for the set of spreading codes of satellites of the constellation of satellites not assigned to pseudolites.

6. The system according to any one of the preceding claims, **characterised in that** said server (S) implements said assistance means (S) by means of a suitable programme.
